# FASCICULE DE BREVET EUROPEEN

(11) **EP 0 614 590 B1**
(45) Date de publication et mention de la délivrance du brevet: **25.02.1998**
(21) Numéro de dépôt: 93901778.6
(22) Date de dépôt: 26.11.1992
(51) Int. Cl.: H04N 1/32, H04L 25/36

(54) **TERMINAL TELEMATIQUE A DEBIT UTILE D'INFORMATIONS PLEIN OU REDUIT**
Telematisches Terminal mit voller oder reduzierter wirksamer Informationsabgabe
TELEMATIC TERMINAL WITH FULL OR REDUCED WANTED INFORMATION BIT RATE

(30) Priorité: 27.11.1991 FR 9114646
(43) Date de publication de la demande: 14.09.1994
(73) Titulaire: SOCIETE D'APPLICATIONS GENERALES D'ELECTRICITE ET DE MECANIQUE SAGEM, F-75783 Paris Cédex 16 (FR)
(72) Inventeur: CHARBONNIER, Philippe, F-78600 Le Mesnil le Roi (FR); DELIVEYNE, Pierre, F-95490 Vauréal (FR); OMGBA, Louis, Bede, F-95000 Jouy-le-Moutier (FR)
(74) Mandataire: Bloch, Gérard
(86) Numéro de dépôt international: FR9201103
(87) Numéro de publication internationale: WO9311628

(56) Documents cités:
- EP-A- 0 381 515
- EP-A- 0 461 859
- JP-A- 1 252 048
- US-A- 4 538 286
- PATENT ABSTRACTS OF JAPAN vol. 14, no. 496 (E-996)29 Octobre 1990 & JP-A-2 206 227 ( RICOH COMPANY LTD. ) 16 Août 1990
- PATENT ABSTRACTS OF JAPAN vol. 15, no. 200 (E-1070)22 Mai 1991 & JP-A-3 053 626 ( NEC CORPORATION ) 7 Mars 1991
- PATENT ABSTRACTS OF JAPAN vol. 6, no. 91 (E-109)28 Mai 1982 & JP-A-57 025 753 ( NIPPON TELEGRAPH AND TELEPHONE CORPORATION ) 10 Février 1982

## Description

La télécopie du groupe G₄, définie par la recommandation T 563 du CCITT, s'effectue par des réseaux numériques à transmission de données, essentiellement du type RNIS (réseau numérique à intégration de services).

En France, l'accès ordinaire au réseau RNIS, d'appellation NUMERIS, s'effectue selon un débit de 64 000 bits/s (64 kb/s).

Aux Etats-Unis, pour considérer cet autre exemple, l'accès s'effectue à 56 kb/s. A l'interconnexion des deux réseaux RNIS français et américain, le réseau de l'émetteur procède à une conversion de débit conforme à la recommandation V110 du CCITT :
- des Etats-Unis vers la France, un bit, forcé à 1, est ajouté (bourré) tous les 7 bits, (une telle technique est décrite dans US-A-4 538 286),
- de France vers les Etats-Unis, un bit sur 8 est retiré.

Le flot de bits est structuré en trames conformes à la recommandation V110 et les huitièmes bits à ajouter ou à retrancher, selon le sens, sont situés en des endroits des trames bien déterminés.

Dans le cas d'une communication de France vers les Etats-Unis, comme le réseau français, à l'interconnexion, retire un bit sur 8, le télécopieur français émetteur est agencé pour que ce bit retiré soit un bit inutile et donc pour ajouter un bit forcé à 1, inutile, tous les 7 bits émis et par conséquent pour réduire le débit utile de 64 kb/s à 56 kb/s. Dans le sens contraire, des Etats-Unis vers la France, le télécopieur français récepteur est agencé pour supprimer 1 bit sur 8 bits reçus.

Dans le cas d'une communication strictement française, les télécopieurs utilisent évidemment la totalité du débit de 64 kb/s.

Pour commander un télécopieur à fonctionner à débit utile plein ou réduit, actuellement, l'usager actionne un inverseur à deux positions, l'une nationale (64 kb/s), l'autre internationale (56 kb/s).

Cette méthode n'est pas satisfaisante. En premier lieu, l'usager soit ne connaît pas soit ne veut pas connaître les nationalités de ses correspondants et les caractéristiques techniques à leur associer. En second lieu, et même s'il était procédé, par le télécopieur, à un traitement automatique des appels sortants, par analyse des codes pays des numéros d'appel, ce traitement ne serait pas infaillible en raison du fait qu'un réseau national peut évoluer ou posséder plusieurs débits de transmission. En troisième lieu, même si on voulait envisager un traitement automatique des appels entrants, il faudrait une signalisation d'appel fournissant les numéros des appelants, ce qui n'est pas encore uniformément le cas.

Il est connu de EP-A-0 381 515 de transmettre avec l'information utile un code d'identification qui sert, après décodage au récepteur, à identifier le type de transmission et/ou le débit.

C'est donc à partir de ce problème particulier de la commande du fonctionnement, eu égard à son débit utile, d'un télécopieur G₄ raccordé à un réseau RNIS, que la demanderesse s'est posé le problème plus général du fonctionnement de tout terminal télématique raccordé à un réseau RNIS, en y apportant d'ailleurs une solution dont la portée, comme cela sera vu ci-après, s'étend encore au-delà de cette application.

Le problème étant posé, c'est en fait en réalisant que toute communication télécopie G₄ commence, conformément à la recommandation T 563, par l'échange, dans les deux sens, de drapeaux HDLC contigus, que la demanderesse a fait germer la solution de l'invention.

Incidemment, après cet échange de drapeaux et avant les trames de données, l'appelant émet une trame SABM (Set Asynchronous Balanced Mode) que l'appelé acquitte par un acquittement UA (Unnumbered Acknowledge).

Un drapeau HDLC (High Rate Data Link Control) est une séquence, identique d'un réseau à l'autre, de six 1 encadrés de 0 (01111110). Dans le système hexadécimal, on peut écrire un drapeau HDLC 0111 1110, soit 7 E. La norme HDLC empêche qu'il apparaisse dans l'information ordinaire, c'est-à-dire dans les trames de données, plus de cinq 1 consécutifs. A cet effet, un 0 est volontairement inséré après toute séquence de cinq 1.

Si les drapeaux proviennent d'un réseau à 64 kb/s, ils sont reçus, avec une allure identique, sur un terminal récepteur national (français) aussi raccordé à un réseau à 64 kb/s. S'ils proviennent d'un réseau à 56 kb/s, ils subissent une modification à l'interconnexion des deux réseaux.

Considérons par exemple un flot initial à 56 kb/s :
...1110011111100111111...

A l'interconnexion, un bit 1 est rajouté tous les 7 bits et le flot reçu à 64 kb/s a l'allure suivante :
...1110101111111001111

Bref, les drapeaux reçus ne sont plus normalisés : indépendamment du cadrage entre les débuts de drapeau et les insertions de huitième bit 1, il apparaît rapidement, au bout de un ou deux drapeaux, la séquence hexadécimale 7 F, qui n'existe que dans le cas de drapeaux provenant d'un réseau à 56 kb/s et reçus sur un réseau à 64 kb/s.

Ayant, exceptionnellement, pratiquement expliqué l'invention, il est maintenant facile de la formuler.

La présente invention concerne un terminal télématique raccordé à un réseau RNIS d'un débit de 64 kb/s et agencé pour fonctionner à un premier débit d'informations utile plein de 64 kb/s et à un deuxième débit d'informations utile réduit de 56 kb/s et comportant des moyens de contrôle de débit utile et des moyens d'émission et des moyens de réception de drapeaux de type HDLC de début de communication, caractérisé par le fait que les moyens de réception de drapeaux HDLC comprennent des moyens de reconnaissance de drapeaux HDLC non normalisés agencés pour commander les moyens de contrôle de débit utile.

Grâce à l'invention, le fonctionnement du terminal, dans le mode approprié à chaque appel entrant ou sortant, est commandé automatiquement, l'usager étant ainsi libéré de ce souci.

Dans la forme de réalisation préférée du terminal de l'invention, lesdits moyens de reconnaissance sont agencés pour reconnaître, dans les drapeaux de début de communication reçus, la présence d'un bit forcé à 1 supplémentaire.

Avantageusement, le terminal de l'invention est un télécopieur du groupe G₄.

A cet égard, il faut souligner ici encore que la présente invention s'applique non seulement à un télécopieur G₄ mais aussi à tout terminal télématique raccordé à un réseau RNIS et appliquant la pile de protocoles de la recommandation T 90 du CCITT, à laquelle se réfère d'ailleurs la recommandation T 563, comme un terminal vidéotex, télétex, etc..

On soulignera aussi que la reconnaissance des bits forcés à 1 supplémentaires, dans la suite de drapeaux HDLC de début de communication, pour adapter le débit utile du terminal est un moyen robuste, en ce sens que des erreurs peuvent être tolérées sans pour autant que la reconnaissance soit affectée : un bit forcé à 1 peut en effet être une fois inséré entre deux 0, mais rapidement après surgira forcément la séquence 7 F.

En outre, les moyens de reconnaissance du terminal de l'invention peuvent être agencés pour reconnaître la présence d'un bit forcé à 1 supplémentaire dans des variantes de drapeaux, par exemple des drapeaux à bit 0 unique qu'on rencontre parfois.

Avantageusement toujours, les moyens de reconnaissance de drapeaux comprennent un registre à décalage, recevant les données série reçues par le terminal, et un décodeur à porte logique et mémorisation par bascule et les moyens de contrôle de débit utile comprennent un registre à décalage et un bloc de modification d'horloge et un bloc de bourrage de bit commandés par le registre des moyens de contrôle pour modifier au vol les données et l'horloge.

De préférence, dans l'état de débit plein, les moyens de contrôle de débit sont transparents et, dans l'état de débit réduit, les moyens de contrôle de débit sont agencés pour éliminer un bit d'horloge sur huit.

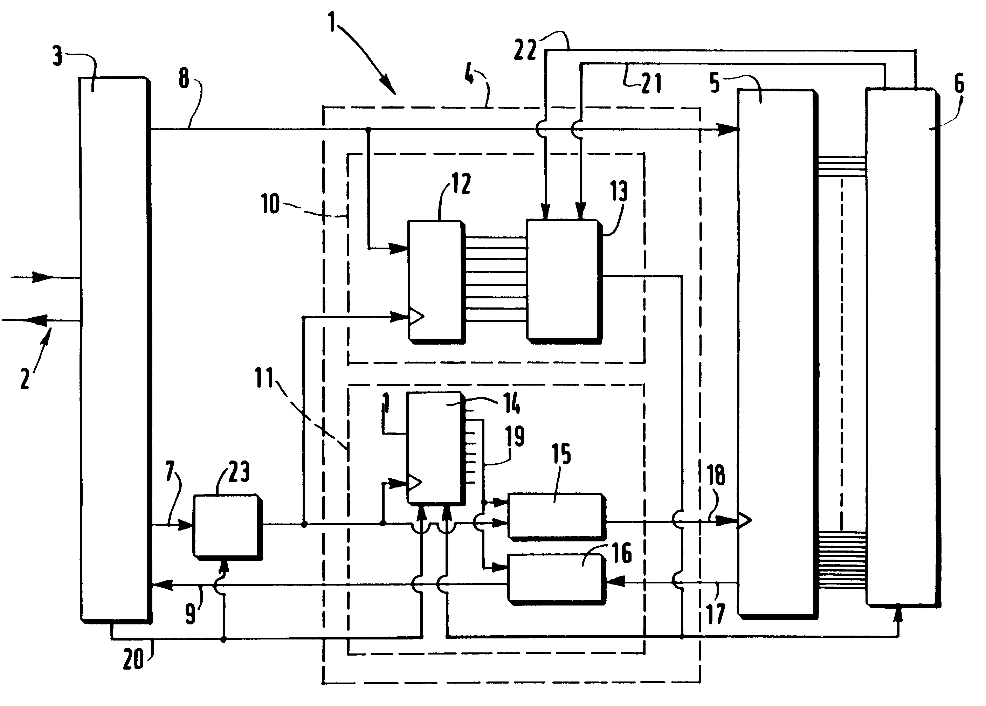

L'invention sera mieux comprise à l'aide de la description suivante de la forme de réalisation préférée du terminal de l'invention, en l'occurrence un télécopieur G₄, en référence à la figure unique en annexe qui représente son schéma par blocs.

La description qui va suivre est donc celle d'un télécopieur 1 du groupe G₄ raccordé au réseau RNIS français NUMERIS 2 à débit de 64 kb/s. Ne seront décrits du télécopieur 1 que les seuls composants et circuits nécessaires à la compréhension de l'invention, les autres, comme par exemple les organes de lecture et d'impression, étant bien connus de l'homme de métier.

Le télécopieur 1 comporte un circuit 3 d'interface avec le réseau 2, un automate 4, un convertisseur série-parallèle 5 et une unité de processeur central 6.

L'interface 3, ici le composant PEB 2085 de la société Siemens, traite les trames RNIS, transmet, sur une ligne 7, le signal d'horloge reçu et, sur une ligne 8, le signal de données série reçues et reçoit, par une ligne 9, les données série du convertisseur 5 à émettre avant de les coder. En particulier, à chaque top d'horloge, l'interface 3 délivre, sur la ligne 8, un bit de donnée reçu du réseau 2 et prélève, de la ligne 9, un bit de donnée à émettre vers le réseau 2.

L'automate 4 comporte un module d'analyse 10, pour reconnaître des drapeaux HDLC normalisés et non normalisés, et un module de traitement 11, pour contrôler le débit utile du télécopieur et commandé par le module d'analyse 10. Le module d'analyse 10 comporte un registre à décalage 12 et un décodeur à mémorisation 13.

Le registre à décalage 12 reçoit, sur son entrée de données, les données série de la ligne 8 et, sur son entrée d'horloge, les bits d'horloge de la ligne 7.

Le registre à décalage 12 comporte huit cases, correspondant aux huit bits des drapeaux HDLC, connectées à huit entrées du décodeur 13.

Le décodeur 13 comporte une porte logique ET, à sept entrées directes et une entrée inversée, suivie d'une bascule.

Lorsqu'une séquence hexadécimale 7 F se présente, la sortie de la porte ET est au niveau 1, ce qui fait passer la bascule dans l'état de travail. C'est l'état de la bascule qui contrôle le débit utile du télécopieur.

A l'état de travail, correspond un débit de 56 kb/s (séquence 7 F reconnue) ; à l'état de repos de la bascule, correspond un débit de 64 kb/s (absence de séquence 7 F).

Le processeur central 6 gère les protocoles et applications de la télécopie G₄.

Le module de traitement 11 comporte un registre à décalage 14, un bloc 15 de modification d'horloge et un bloc de bourrage 16. Le bloc 16 est relié, à l'entrée, à la sortie série du convertisseur 5 par une ligne 17 et, à la sortie, à la ligne 9. Le bloc 15 est relié, à l'entrée, à la ligne 7 et, à la sortie, a l'entrée d'horloge du convertisseur 5 par une ligne 18. Le registre à décalage 14 reçoit le signal d'horloge de la ligne 7 et est relié, à sa sortie, à des entrées des blocs 15, 16 par une ligne 19. Le module de traitement 11 est défini pour modifier au vol les données et l'horloge.

Dans l'état 64 kb/s du décodeur 13, le module de traitement 11 est transparent. Par le convertisseur 5, le processeur central 6 reçoit directement et sans modification de l'interface 3 les bits d'horloge, par la ligne 7-15-18, et les bits de données, par la ligne 8 ; il transmet, toujours par le convertisseur 5, directement à l'interface 3 les bits de données à émettre, par la ligne 17-16-9.

La sortie du décodeur 13 est reliée au registre à décalage 14 du module de traitement 11, pour l'activer dans l'état 56 kb/s, ainsi que, à toutes fins utiles, au processeur 6 pour, par exemple, l'affichage du mode en cours.

Dans l'état 56 kb/s du décodeur 13, le registre 14, commandé par le signal d'horloge de la ligne 7 et activé par le décodeur 13, délivre un bit tous les huits bits d'horloge. Le registre 14 commande, par la ligne 19, le bloc 15 de modification d'horloge pour éliminer, à l'entrée d'horloge (18) du convertisseur 5, un bit d'horloge sur huit.

Sur la voie réception 8-5, le bit de donnée, correspondant au bit d'horloge éliminé, et qui est inutile car précédemment rajouté par le réseau, n'est pas pris en compte par le convertisseur 5.

Sur la voie émission 17-16-9, le bit de donnée correspondant au bit d'horloge éliminé n'est pas extrait du convertisseur 5 et, à la place, le bloc de bourrage 16, commandé à travers la ligne 19 par le registre 14, délivre à l'interface 3, par la ligne 9, un bit forcé à 1 qui sera ensuite éliminé par le réseau.

Les bourrages et éliminations de bits auxquels procède le module de traitement 11 sont correctement calés grâce à une synchronisation d'octets fournie par l'interface 3 sur une ligne 20 reliant l'interface 3 et le registre 14 du module de traitement 11 et un bloc intermédiaire 23 de synchronisation d'horloge.

Plus précisément, le registre 14 propage un 1 jusqu'à sa septième sortie en sept tops d'horloge. Le niveau 1 sur cette septième sortie valide, au huitième top d'horloge, les circuits de modification d'horloge du bloc 15 et les circuits de bourrage du bloc 16. Puis la synchronisation d'octets fournie sur la ligne 20 remet à zéro le registre 14 et le cycle recommence.

En début de communication, le télécopieur 1 est dans l'état 64 kb/s. Il passe dans l'état 56 kb/s sous l'action du module d'analyse 10 qui reconnaît une séquence 7 F et y reste jusqu'à la fin de la communication avant de rebasculer dans l'état 64 kb/s à l'aide d'une ligne 21 reliant le processeur 6 au décodeur 13. Eventuellement, le processeur central 6 peut bloquer l'automate 4 dans l'un ou l'autre des deux états, par une deuxième ligne 22 le reliant au décodeur 13, dès qu'il a reçu des informations cohérentes lui confirmant qu'il est bien dans le bon état, par exemple suite à un échange réussi des trames SABM et UA.

## Revendications

1. Terminal télématique (1) raccordé à un réseau RNIS (2) d'un débit de 64 kb/s et agencé pour fonctionner à un premier débit d'informations utile plein de 64 kb/s et à un deuxième débit d'informations utile réduit de 56 kb/s et comportant des moyens (11) de contrôle de débit utile et des moyens d'émission et des moyens de réception de drapeaux de type HDLC de début de communication, caractérisé par le fait que les moyens de réception de drapeaux HDLC comprennent des moyens (10) de reconnaissance de drapeaux HDLC non normalisés agencés pour commander les moyens de contrôle de débit utile (11).

2. Terminal selon la revendication 1, dans lequel lesdits moyens de reconnaissance (10) sont agencés pour reconnaître, dans les drapeaux de début de communication reçus, la présence d'un bit forcé à 1 supplémentaire.

3. Terminal selon l'une des revendications 1 et 2, qui est un télécopieur du groupe G₄.

4. Terminal selon l'une des revendications 1 à 3, dans lequel les moyens de reconnaissance de drapeaux (10) comprennent un registre à décalage (12), recevant les données série reçues par le terminal, et un décodeur à porte logique et mémorisation par bascule (13).

5. Terminal selon l'une des revendications 1 à 4, dans lequel les moyens de contrôle de débit utile (11) comprennent un registre à décalage (14) et un bloc (15) de modification d'horloge et un bloc de bourrage de bit (16) commandés par le registre (14) des moyens de contrôle (11) pour modifier au vol les données et l'horloge.

6. Terminal selon l'une des revendications 1 à 5, dans lequel, dans l'état de débit plein, les moyens de contrôle de débit (11) sont transparents.

7. Terminal selon l'une des revendications 1 à 6 dans lequel, dans l'état de débit réduit, les moyens de contrôle de débit (11) sont agencés pour éliminer un bit d'horloge sur huit.

8. Terminal selon la revendication 5, dans lequel le bloc de modification d'horloge (15) et le bloc de bourrage (16) sont connectés en parallèle entre un convertisseur série-parallèle (5), relié à un processeur (6), et un circuit (3) d'interface avec un réseau (2).

9. Terminal selon les revendications 4 et 5, dans lequel le décodeur (13) est relié au registre à décalage (14) des moyens de contrôle de débit (11).

## Patentansprüche

1. Telematik-Terminal (1), das an ein RNIS-Netz (2) mit einer Übertragungsgeschwindigkeit von 64 kb/s angeschlossen und so angeordnet ist, daß es bei einer ersten vollen Nutzübertragungsgeschwindigkeit von Daten von 64 kb/s und bei einer zweiten verringerten Nutzübertragungsgeschwindigkeit von Daten von 56 kb/s arbeitet, und das Mittel (11) zur Kontrolle der Nutzübertragungsgeschwindigkeit und Mittel zum Senden und Mittel zum Empfangen von Flags bzw. Kennzeichen für den Beginn der kommunikation des HDLC Typs aufweist,
dadurch gekennzeichnet, daß
die Mittel zum Empfangen von HDLC-Kennzeichen Mittel (10) zur Erkennung von nicht normalisierten HDLC-Kennzeichen aufweisen, die angeordnet sind, um die Mittel (11) zur Kontrolle der Nutzübertragungsgeschwindigkeit zu steuern.

2. Terminal nach Anspruch 1,
wobei die Mittel (10) zur Erkennung angeordnet sind, um in den empfangenen Kennzeichen bzw. Flags für den Beginn der Kommunikation die Anwesenheit eines auf 1 gesetzten zusätzlichen Bits zu erkennen.

3. Terminal nach Anspruch 1 oder 2,
der ein Telekopierer der Gruppe G₄ ist.

4. Terminal nach einem der Ansprüche 1 bis 3,
wobei die Mittel (10) zur Erkennung von Kennzeichen ein Schieberegister (12), das die von dem Terminal empfangenen Datenserien empfängt, und wobei die Mittel einen Decoder mit logischem Gatter und Speicherung durch Kippschaltung (13) aufweisen.

5. Terminal nach einem der Ansprüche 1 bis 4,
wobei die Mittel (11) zur Kontrolle der Nutzübertragungsgeschwindigkeit ein Schieberegister (14) und einen Block (15) zur Modifikation des Zeitgebers und einen Block (16) zum Bitauffüllen aufweisen, die durch das Register (14) der Kontrollmittel (11) gesteuert sind, um die Daten und den Zeitgeber um Flug zu modifizieren.

6. Terminal nach einem der Ansprüche 1 bis 5,
wobei in dem Zustand der vollen Übertragungsgeschwindigkeit die Mittel (11) zur Kontrolle der Übertragungsgeschwindigkeit transparent sind.

7. Terminal nach einem der Ansprüche 1 bis 6,
wobei in dem Zustand der verringerten Übertragungsgeschwindigkeit die Mittel (11) zur Kontrolle der Übertragungsgeschwindigkeit angeordnet sind, um ein Zeitgeberbit auf acht zu eliminieren.

8. Terminal nach Anspruch 5,
wobei der Block (15) zur Modifikation des Zeitgebers und der Auffüllblock (16) zwischen einem Seriell-Parallel-Umsetzer (5), der an einen Prozessor (6) angeschlossen ist, und einer Schnittstellenschaltung (3) mit einem Netz (2) parallelgeschaltet sind.

9. Terminal nach Anspruch 4 und 5,
wobei der Decoder (13) an dem Schieberegister (14) der Mittel (11) zur Übertragungsgeschwindigkeitskontrolle angeschlossen ist.

## Claims

1. Telematic terminal (1) connected to an ISDN network (2) with a flow rate of 64 kb/s and arranged to operate at a first full useful data flow rate of 64 kb/s and at a second lower useful data flow rate of 56 kb/s and comprising means (11) for controlling the useful flow rate and means for transmission and means for reception of communication start flags of the HDLC type, characterised in that the means for receiving HDLC flags comprise means (10) for recognising non-standardised HDLC flags arranged to control the useful flow rate control means (11).

2. Terminal according to claim 1, wherein the said recognition means (10) are arranged to recognise, in the received communication start flags , the presence of an additional bit forced to 1.

3. Terminal according to one of claims 1 and 2, which is a facsimile machine of the group G₄.

4. Terminal according to one of claims 1 to 3, wherein the flag recognition means (10) comprise a shift register (12), receiving serial data received by the terminal, and a decoder with a logic gate and storage by flip flop (13).

5. Terminal according to one of claims 1 to 4, wherein the means for controlling the useful flow rate (11) comprise a shift register (14) and a clock modification unit (15) and a bit stuffing unit (16), these being controlled by the register (14) of the control means (11) in order to modify, as they present, the data and the clock.

6. Terminal according to one of claims 1 to 5, wherein in the full flow rate state the flow rate control means (11) are transparent.

7. Terminal according to one of claims 1 to 6, wherein, in the low flow rate state, the flow rate control means (11) are arranged to eliminate one clock bit out of eight.

8. Terminal according to claim 5, wherein the clock modification unit (15) and the stuffing unit (16) are connected in parallel between a series-parallel convertor (5), connected to a processor (6), and a circuit (3) for interface with a network (2).

9. Terminal according to claims 4 and 5, wherein the decoder (13) is connected to the shift register (14) of the flow rate control means (11).
